# EUROPEAN PATENT APPLICATION

(11) **EP 0 679 985 A1**
(43) Date of publication of application: **02.11.1995**
(21) Application number: 95103645.8
(22) Date of filing: 14.03.1995
(51) Int. Cl.: G06F 3/023, G06F 17/21

(54) **Word processor**

(30) Priority: 14.03.1994 JP 69890/94
(71) Applicant: BROTHER KOGYO KABUSHIKI KAISHA, Nagoya-shi, Aichi-ken (JP)
(72) Inventor: Mori, Masaharu, Mizuho-ku, Nagoya-shi, Aichi-ken (JP); Koie, Kazuaki, Mizuho-ku, Nagoya-shi, Aichi-ken (JP); Nakagawa, Sachiko, Mizuho-ku, Nagoya-shi, Aichi-ken (JP); Omura, Kengo, Mizuho-ku, Nagoya-shi, Aichi-ken (JP)
(74) Representative: Prüfer, Lutz H., Dipl.-Phys.

(57) **Abstract**

In a non-WYSIWYG word processor such as a tape printer, formatting information (font, size, intensity, etc.) for the text at the cursor position is shown by changing the shape, style or colour of the cursor itself. The relevant formatting information can thus be displayed without requiring the user to divert his attention away from the text.

## Description

The present invention related to a word processor capable of preparing and editing text data while displaying the text data in print-like images on a display means. More particularly, the invention relates to the word processor allowing easy discernment of the range and the content of difficult-to-display format information by changing the shape of the cursor according to format set in the text data.

There has been known a conventional word processor having a print image display mode wherein text can be edited while print-like images are displayed on a display. The print-like images appear close to how the text, including characters and the like inputted from an input means such as a keyboard, will appear when printed. The word processor generally includes various format setting functions, for example, enhancement functions such as bold print and outline print, a function for producing the frame that encloses the desired range of characters, and a numbering function for sequentially incrementing reference numbers in the text.

In order to prepare text in the desired manner with such a word processor, an operator must be able to recognize, while preparing text, the type of formats that were set using the various format setting functions and the range at which the formats are set.

In this case, because a conventional word processor does not display the type of each format or the range at which the formats are set in the print image display mode, this mode is temporarily switched to a text mode in which the type of each format or the range at which the formats are set are displayed in addition to the text. Visual confirmation of the type and range of each format is possible in the text mode by viewing the format information appearing on the display.

However, an operator must switch the display mode of the above-described conventional word processor from the print image display mode to the text mode each time the operator wants to confirm the type of set format set to a desired range of text and the range of the text affected by the format setting. The relevant switching operations are very troublesome. As a result, text can not be smoothly prepared.

It is an objective of the present invention to overcome the above-described problems and to provide a word processor wherein the type of format and the range of the format can be easily confirmed in the print image display mode, so that desired text can be efficiently prepared without switching between the two modes. Thin objective is attained by changing the shape of a cursor displayed in the print image display mode according to the type of format set to the text.

To achieve the above and other objects, the word processor according to the present invention includes input means for inputting text data representative of a text comprising characters; print-like image data preparing means for preparing print-like image data based on the text data inputted from the input means; display means for displaying print-like images of text data according to the image data prepared by the print-like image data preparing means and for displaying a cursor with the print-like images; cursor movement means for moving the cursor over the display means; and format setting means for setting various formats to portions of or all of the text data.

The word processor of the invention further includes cursor kind memory means for storing plural kind of cursors different from one another corresponding to types of formats set by the format setting means. The kinds of cursors may indicate cursor shapes having different shapes for each type of format, or cursor colors having different colors for each type of format The word processor further includes display control means for causing the cursor to be displayed in the display means in a different kind for each format when the cursor is moved using the cursor movement moans wherein the kind at which the cursor is displayed is based on the cursor kinds stored in the cursor kind memory means and based further on format set for the text data where the cursor is positioned. The display means having a full color displaying capability is used when the cursor is displayed in different colors.

A word processor according to the present invention is a so-called tape printer which includes print instruction means for issuing an instruction to print the text data; tape feeding means for feeding an elongated, tape-like print medium in a lengthwise direction of the print medium; and printing means for printing the text data on the print medium while feeding the print medium by the tape feeding means in accordance with the instruction received from the print instruction means.

In the word processor, text memory means is further provided for storing the text data input from the input means. The formats set to the text data are further stored in the text memory means in relation to the portions of the text data to which the formats are set. A standard format is stored in a predetermined storage location of the text memory means so that remaining portions of the text data to which the formats are not set are printed in accordance with the standard format.

Data pointing means is further provided for pointing out data stored in the text memory means. The data pointing means changes addresses of the text data memory in accordance with the movement of the cursor over the display means to point out data on an address in which the data pointing means is located.

Display cursor memory means is provided for storing the kind or the shape of the cursor to be displayed. Each of the formats set by the format setting means includes a format start code indicative of a start of the format and a format end code indicative of an end of the format. When the data pointed out by the data pointing means indicates the format start code, the display control means displays the cursor in the display means in a kind, e.g. a color, a shape corresponding to the format having the format start code pointed out by the data pointing means. Further, when the data pointed out by the data pointing means indicates the format start code, the display control means so displays the cursor until an associated format end code is pointed out by the data pointing means.

When the data pointed out by the data pointing means indicates the format start code, the kind of the cursor to be displayed in the display means is stored in the display cursor memory means, whereas when the data pointed out by the data pointing means indicates the format end code, contents stored in the display cursor memory means are cleared.

In the present invention with the above-described construction, first text data including data on characters and/or symbols is inputted via the input means. Various type of format data is set to a portion or all of the inputted text data by the format setting means. Image data is prepared by the image data preparation means. Afterward, print-like images of the text data is displayed on the display means according to the image data.

When the cursor is moved on the display means by the cursor movement means, based on the formats set to the text data where the cursor is located and on the cursor kinds stored in the cursor shape memory means, the display control means controls kind at which the cursor is displayed on the display means so that the kind of the cursor, which may shape of the cursor or color of the cursor, appears different according to the type of format.

Because the kind at which the cursor is displayed is controlled according to the type of format set to the text where the cursor is positioned, discerning the kind of the cursor allows an operator to easily and at a glance discern the format set to the text data and the range of the set format.

The particular features and advantages of the invention as well as other objects will become more apparent from the following description taken in connection with the accompanying drawings, in which:
Fig. 1 is a planer view of a tape printer;
Fig. 2 is an explanatory view showing a plane view of a print mechanism of the tape printer;
Fig. 3 is a control block diagram of the tape printer;
Fig. 4 is a flowchart showing a main process program of the tape printer;
Fig. 5 is a flowchart of a cursor display control program;
Fig. 6 is a flowchart of a left cursor display control program;
Fig. 7 is an explanatory view schematically showing text data stored in a text memory; and
Fig. 8 is an explanatory view schematically showing changes in the shape at which a cursor is displayed on a liquid crystal display.

A description of a preferred embodiment of a tape printer according to the present invention will be provided below while referring to the drawings.

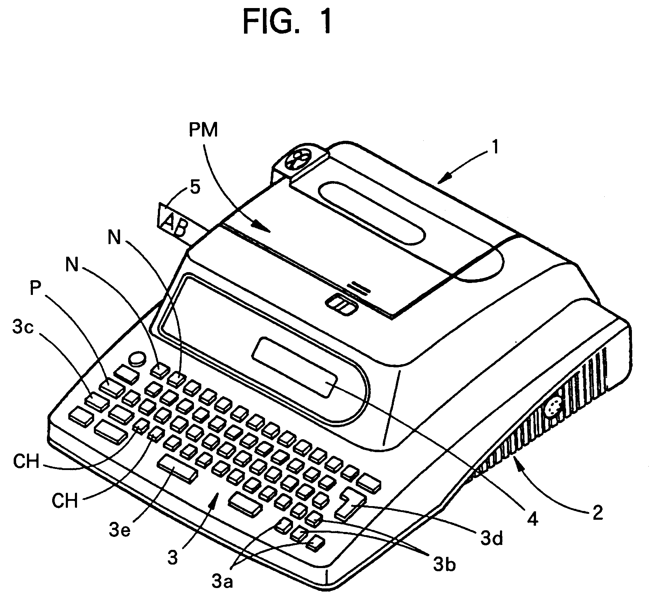

First, the overall construction of the tape printer 1 will be described while referring to Fig. 1.

Fig. 1 is a planer view of the tape printer 1. A keyboard 3 is disposed in front of a body frame 2 of a tape printer 1 and a printing mechanism PM is provided at the rear of the keyboard 3 and within the body frame 2. A liquid crystal display (LCD) 4 capable of displaying characters, numerals, and various types of enhancement information is provided to the main body of the tape printer 1.

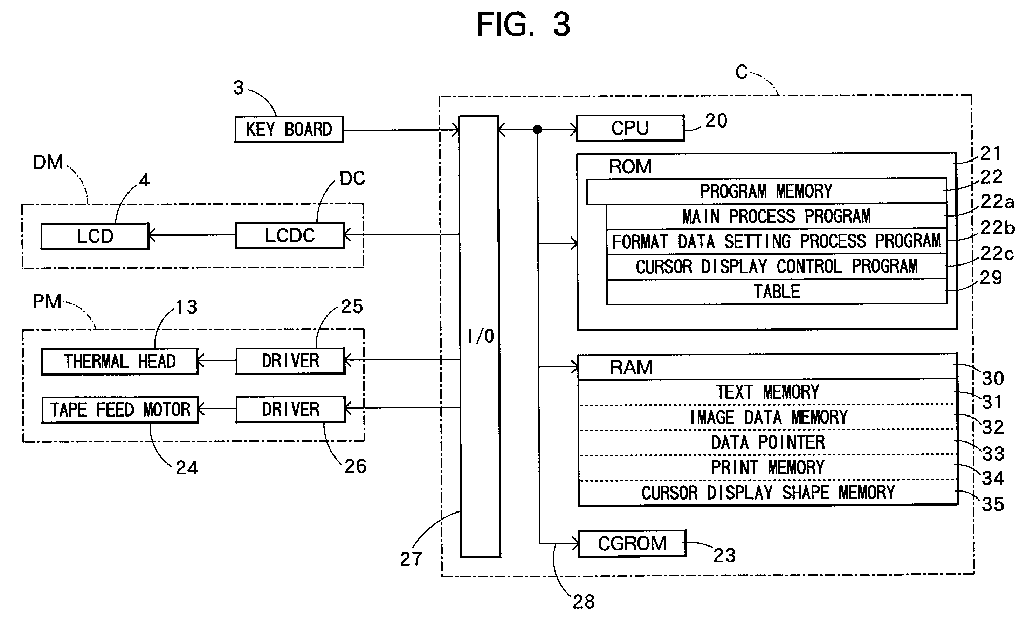

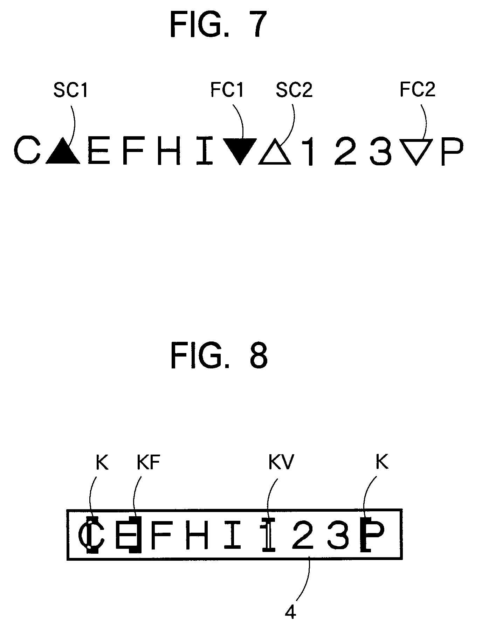

On the keyboard 3 there are arranged a variety of keys necessary for operating the tape printer 1 such as cursor horizontal movement keys 3a for moving the cursor K (see Fig. 7) horizontally over the LCD 4; cursor vertical movement keys 3b for moving the cursor K vertically; and a format menu key 3c for displaying various settable formats on the LCD 4. In addition, there are provided a return key 3d for starting new lines, for executing various commands, and for setting start and stop points for various setting ranges; character keys CH for inputting symbols, characters, and the like; numeric keys for inputting numbers; a print key P for commanding the print mechanism PM to print characters, numbers, frames, and the like on an elongated, tape-like print medium (hereinafter referred to as "print tape"); and a space key 3e. The display on the LCD 4 of various data inputted from the character keys CH and the numeric keys N is controlled by a display controller DC (refer to Fig. 3).

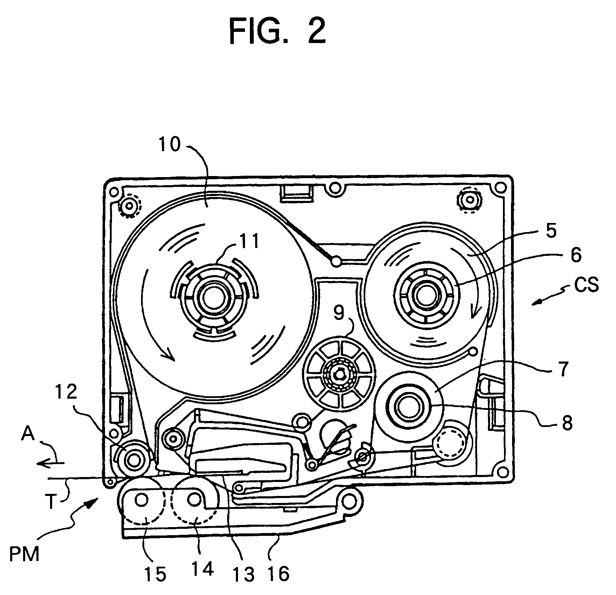

Further, the printing mechanism PM will be described in detail while referring to Fig. 2. Fig. 2 is a planer view for describing the printing mechanism in the tape printer 1.

The tape containing cassette CS is removably loaded in the printing mechanism PM. Within the tape containing cassette CS, there are rotatably provided a tape spool 6 around which is wound a transparent film serving as a print tart 5 with a predetermined width; a ribbon supply spool 8 around which an ink ribbon 7 is wound; a take-up spool 9 for taking up the ink ribbon 7; a double-adhesive tape supply spool 11 around which a double-adhesive tape 10 with the same width as the print tape 5 is wound with its peel-off paper on the outside; and a joining roller 12 for adhering the double-adhesive tape 10 to the print tape 5.

A thermal head 13 is installed upright in the position where the print tape 5 and the ink ribbon 7 overlap each other, i.e., at the position of a platen roller 14. The platen roller 14 for pressing the print tape 5 and the ink ribbon 7 against the thermal head 13, and a feed roller 15 for pressing the print tape 5 and the double-adhesive tape 10 against the joining roller 12, are rotatably supported on a support member 16. On the thermal head 13, 128 heating elements are arranged in the vertical direction. The thermal head 13 prints characters and the like on the print tape 5. A printed tape T is formed by joining the thus-printed print tape 5 to the double-adhesive tape 10 by associated movement of the joining roller 12 and the feed roller 15. The printed tape T is fed in the tape feeding direction A.

Next, a description of the control system for the tape printer 1 will be provided while referring to Fig. 3. Fig. 3 is a block diagram showing the control system of the tape printer 1.

The tape printer 1 includes a control device C. The control device C includes a CPU 20 for performing various calculations based on various programs stored in the ROM 21; a ROM 21 provided with a program memory 22 for storing the various programs; a CGROM 23 storing display and print dot pattern data in correspondence with code data; a RAM 30 for temporarily storing results of calculations performed in the CPU 20; and a bus 28 for connecting the CPU 20, the ROM 21, the CGROM 23, and the RAM 30 to ouch other and to an input/output interface 27.

Various programs are stored in the program memory 22 of the ROM 21. The programs include a main process program 22a for operating the tape printer 1; a format data setting process program 22b for subjecting text data, formed from characters, numbers, and the like, to various format data setting processes; cursor display control program 22c for changing, based on the type of format data set to the text data, the shape at which the cursor K is displayed; an image display process program for displaying an image on the LCD 4; and other programs, such as a print control program, needed for controlling the tape printer 1. A table 29 with cursor display shapes in correspondence to various format data set to the text data is also stored in the program memory 22.

The RAM 30 is divided into several memory areas, for example, text memory 31 for storing text data inputted using the character keys CH and the numeric keys N; image data memory 32 for storing as print-like images the text data stored in the text memory 31; a data pointer 33 for storing the retrieval address in the text memory 31 for changing, according to the format data set to the text data, the displayed shape of the cursor K (the content of the data pointer 33 will be referred to as the data pointer DP hereinafter); print memory 34 for storing print data; and a cursor display shape memory 35 for storing, in correspondence with the various format data retrieved from the cursor display shape table 29, shapes at which the cursor is displayed.

The keyboard 3 and a display unit DM are connected to the input/output interface 27. When a character key CH or a numeric key N on the keyboard 3 is depressed, the character or number corresponding to the depressed character key CH or numeric key N is stored in the text memory 31 and the character or number is displayed on the LCD 4 by the display controller DC.

Further, the printing mechanism PM is connected to the input/output interface 27. When the print key P on the keyboard 3 is depressed, the dot pattern data stored in the print memory 34 is transmitted via the input/output interface 27 to the printing mechanism PM. The data in the print memory 34 is then printed on the print tape 5 in cooperation with the tape feed motor 24, which is driven by an associated driver 26, and the thermal head 13, which is driven by an associated driver 25.

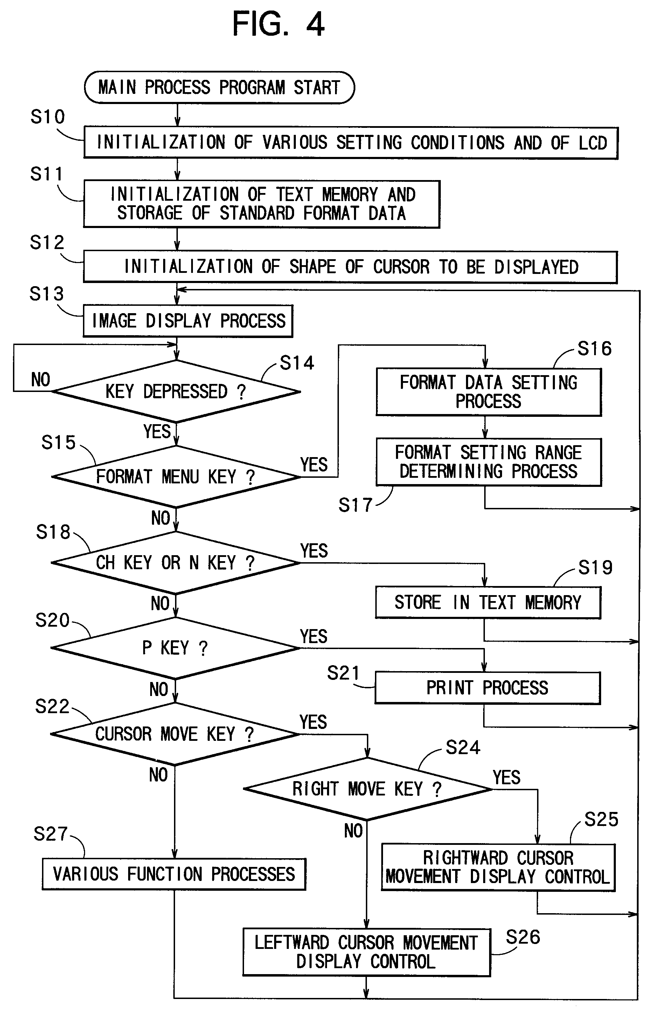

Next, a description of a main process program 22a of the tape printer 1 constructed as described above will be provided while referring to Fig. 4. Fig. 4 is flowchart of the main process program 22a of the tape printer 1.

When the power is turned on, initialization of various setting conditions and of the liquid crystal display (LCD) 4 is performed in S10. Then in S11, the text memory 31 is initialized and standard format data is stored in the initial address position of the text memory 31. Further, the shape at which the cursor K is displayed is initialized in S12, whereupon the cursor K is displayed in its standard shape on the LCD 4.

Next, image display processes are executed in S13. When the tape printer 1 is first turned on, only a frame is displayed on the LCD 4 because no text data is stored in the text memory 31. After text data is produced by input from character keys CH or numeric keys N, the content of the text memory 31 is formed into a print-like image and stored in the image data memory 32. Text data is displayed on the LCD 4 in print-like images based on the image data in the image data memory 32. Image display proceases are well known, so details will be omitted from this description.

After the image display processes are executed in S13, whether an input key has been depressed is determined in S14. The program goes into a standby mode (i.e., S14 is NO) until key input is present. When key input is present (i.e., S14 is YES), whether the input is from the format menu key 3c or not is determined in S15. If so (i.e., S15 is YES), the format data setting process program 22b is executed in S16.

Next, a description of the format data setting process program 22b will be provided.

When the format data setting process program 22b is started, first a settable format data menu is displayed on the LCD 4. Afterward, presence or absence of key input is determined and the program enters a standby mode until data is inputted via a key. When data is inputted via a key, whether the inputted data was from operation of any of the cursor movement keys 3a or 3b. The format data to be set is selected by input from the cursor movement keys 3a and 3b.

When none of the cursor movement keys 3a or 3b were operated, whether the operated key is the return key 3d or not is determined. If so, the selected format data is set as format setting data.

Some examples of format data that can be set in the format setting processes of S16 are character enhancement processes for producing enhanced characters, such as bold characters and outline characters, from inputted characters; local frame processes for framing only one of many lines of inputted characters and numbers; global frame processes for framing all rows of characters and numbers; numbering processes for printing while sequentially incrementing reference numbers and the like. This type of format data is stored in the format data setting process program 22b.

When the desired format is set, the operator sets the range of text data to be subjected to the desired format by using the cursor movement keys 3a and 3b and the return key 3d. Processes for setting the format to the indicated range are executed in S17. When the content and range of the format data are set in this way, start data and set format data are stored in the text memory 31 immediately before the text data where the range of the format data starts. The start data indicates the start point of the set range and the set format data indicates the content of the set format. After the start data and set format data are stored, the program proceeds to S13 where text data reflecting the set data is displayed as a print-like image on the LCD 4.

In S15, when the key input is determined not to be from the format menu key 3c, i.e., S15 is NO, whether or not the key input is from a character key CH or numeric key N is determined in S18. If so, i.e., S18 is YES, the inputted character data and/or numeric data is stored in the text memory 31 in S19. Then, the program returns to S13 where the inputted character data and/or numeric data is displayed as a print-like image on the LCD 4.

In S18, when key input is determined not to be from a character key CH or numeric key N, i.e., S18 is NO, whether the key input is from the print key P or not is determined in S20. If so, i.e., S20 is YES, the print mechanism PM is controlled based on the print data stored in the print memory 34 so that the text data is printed on the print tape 5. When format data is set to this text data, the text data is printed reflecting the nature of the set format data.

When, in S20, the key input is not from the print key P, i.e., S20 is NO, whether or not the key input is from one of the cursor horizontal movement keys 3a is determined in S22. If so, i.e., S22 is YES, whether or not the key input is from the move cursor right key 3a is determined in S24. If so, i.e., S24 is YES, the rightward cursor movement display control program of the cursor display control program 22c is executed in S25. If the key input is determined not to be from the cursor move key 3a, i.e., S24 is NO, the leftward cursor movement display control program of the cursor display control program 22c is executed in S26. When, in S22, the key input is not from one of the cursor horizontal movement keys 3a, i.e., S22 is NO, various function processes are executed in S27.

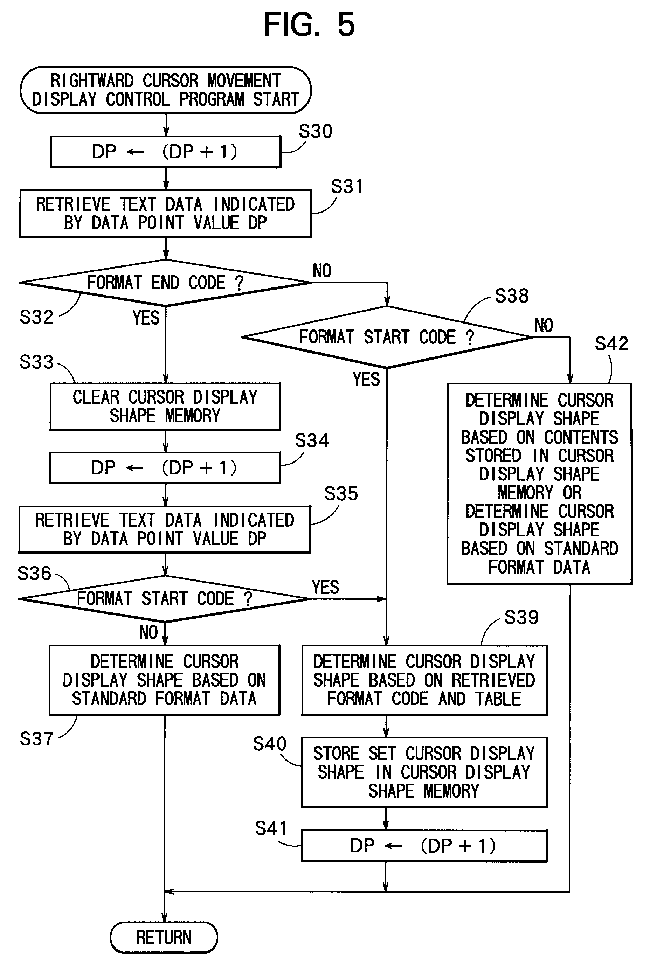

Next, a description of the cursor display control will be provided while referring to Fig. 5. Fig. 5 is a flowchart showing the rightward cursor movement display control program.

When the rightward cursor movement display control program is started, first, the data pointer value DP stored in the data pointer 33, which is for indicating what data is to be retrieved from the text data stored in the text memory 31, is incremented by one in S30. Next, the text data indicated by the incremented data pointer value DP is retrieved from the text memory 31 in S31. These steps S30 and S31 results in the cursor K moving rightward on the LCD 4 according to the input from the move cursor right key 3a.

Next, whether or not the text data retrieved in S31 is an end code for indicating the end of a format range is determined in S32. If text data is found to be a format end code, i.e., S32 is YES, the cursor display shape memory 35 is cleared in S33 and the data pointer value DP is again incremented by one in S34.

After the data pointer value DP is incremented by one in S34, the text data indicated by the data pointer value DP is retrieved in S35. Then whether or not the retrieved text data corresponds to a format start code is determined in S36. When the retrieved text data is not a format start code, i.e., S36 is NO, this means that this portion of the retrieved text data is not set with format data. Therefore, in S37 the cursor display shape is set based on the standard format data stored at the initial address position in the text memory 31.

In S32, when it is determined that text data retrieved according to the indication of the data pointer value DP is not a format end code, i.e., S32 is NO, whether or not the retrieved text data is a format start code is determined in S38. If so, i.e., S38 is YES, the program proceeds to S39. Also, if the text data retrieved as indicated by the data pointer value DP is determined in S36 to be a format start code, i.e., S36 is YES, the program proceeds to S39.

In S39, the format data set to the portion of the text data is identified based on the retrieved format start code and the retrieved format code stored with the format start code. Then, the shape at which the cursor is displayed is determined based on the thus identified format data and the contents in the cursor display shape table 29 stored in the ROM 21. The thus determined cursor display shape is stored in the cursor display shape memory 35 in S40 and the data pointer value DP is incremented by one in S41, whereupon this routine returns to the main program.

Further, when the text data retrieved according to the data pointer value DP is found not to be a format start code, i.e., S38 is NO, this means that either the cursor K is at a position on the LCD 4 within a range of a portion of text data that is set with a format or the cursor K is at a position outside of a range at which text data is set with a format. Therefore, in S42 either the shape of the cursor to be displayed is determined based on the cursor display shape stored in the cursor display shape memory 35 or the shape of the cursor to be displayed is determined based on standard format data set at the initial memory position of the text memory 31. Then, this routine returns to the main program.

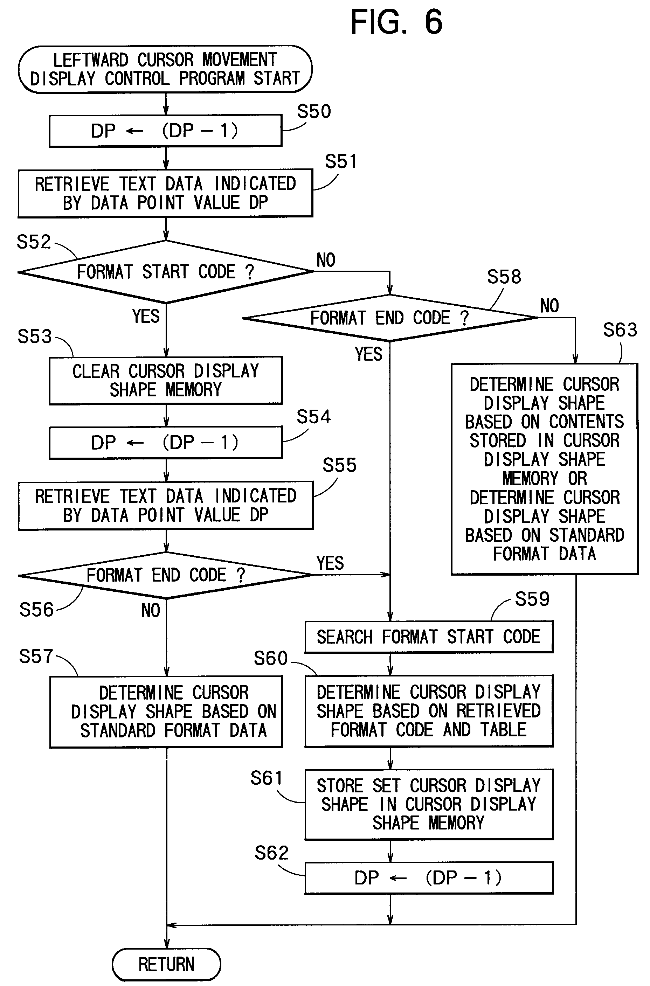

Further, a description of the leftward cursor movement display control will be provided while referring to Fig. 6. Fig. 6 is a flowchart showing the leftward cursor movement display control program.

When the leftward cursor movement display control program is started, first, the data pointer value DP stored in the data pointer 33, which is for indicating what data is to be retrieved from the text data stored in the text memory 31, is decremented by one in S50. Next, the text data indicated by the decremented data pointer value DP is retrieved from the text memory 31 in S51. These steps S30 and S31 results in the cursor K moving leftward on the LCD 4 according to the input from the move cursor left key 3a.

Next, whether or not the text data retrieved in S51 is a start code for indicating the start of a format range is determined in S52. If text data is found to be a format end code, i.e., S52 is YES, the cursor display shape memory 35 is cleared in S33 and the data pointer value DP is again decremented by one in S54.

After the data pointer value DP is decremented by one in S54, the text data indicated by the data pointer value DP is retrieved in S55. Then, whether or not the retrieved text data corresponds to a format end code is determined in S56. When the retrieved text data is not a format end code, i.e., S56 is NO, this means that this portion of the retrieved text data is not set with format data. Therefore, in S57 the cursor display shape is determined based on the standard format data stored at the first address in the text memory 31.

A search for a format start code is performed in S59 toward the initial address position of the text memory 31. In S60, the format data set to the text data is identified based on the format code stored with the format start code which was found in the search. The shape of the cursor to be displayed is determined based on the thus identified format data and the cursor display shape table 29 provided in the ROM 20. The set cursor display shape is stored in the cursor display shape memory 35 in S61 and the data pointer value DP is decremented by one in S62, whereupon this routine returns to the main program.

Further, when the text data retrieved according to the data pointer value DP is found not to be a format end code, i.e., S58 is NO, this means that either the cursor K is at a position on the LCD 4 within a range of a portion of text data that is set with a format or the cursor K is at a position outside of a range at which text data is set with a format. Therefore, in S63, either the shape of the cursor to be displayed is determined based on the cursor display shape stored in the cursor display shape memory 35 or the shape of the cursor to be displayed is determined based on standard format data set at the initial address position of the text memory 31. Then, this routine returns to the main program.

Each time one of the cursor movement keys 3a is operated, the above-described cursor display control program 22c is executed to control the shape of the cursor K to be displayed on the LCD 4.

Next, a description of movement of the data pointer value DP in the text memory 31, of movement of the cursor K on the LCD 4, and of changes in the display will be provided while referring to Figs. 7 and 8. Fig. 7 is an explanatory view schematically showing text data stored in the text memory 31. Fig. 8 is an explanatory view schematically showing charges in the displayed shape of the cursor on the LCD 4.

In Fig. 7, SC1 indicates a frame setting format start code, FC1 indicates a frame setting format end code, SC2 indicates a numbering setting format start code, and FC2 indicates a numbering setting format end code.

That is, a framing process is set for the letters E through I and a numbering process is set for the numbers from 1 through 3. Because format data is not set to either letter C or P, the format for these letters is set by the standard format data stored in the initial address position of the text memory 31.

While referring to Figs. 7 and 8, a description will be provided for the changes in the shape at which the cursor is displayed when the cursor K is moved across the LCD 4 by depression of the cursor movement key 3a while text data is set with format data.

At this time, the cursor K is at the position of the letter C. When cursor K moves to the position of the letter E by depression of the cursor movement key 3a, the shape at which the cursor is displayed changes to the cursor shape KF. In terms of text data, on the other hand, because the data pointer value DP points to SC1, it is discerned that framing processes are set after the letter C. Therefore, the letter E is pointed to by the data pointer value DP after the shape at which the cursor is displayed is set according to the framing processes.

Consecutive depression of the cursor movement key 3a will move the cursor KF to the position of number 1 and change the shape at which the cursor is displayed to the cursor shape KV. At this point, because the data pointer value DP points to FC1 in the text data, it is discerned that this is the end of the set range of the framing processes. Then, because SC2 is pointed to, it is recognized that numbering processes are set thereafter. Therefore, the shape at which the cursor is displayed will correspond to the numbering processes and the number 1.

When the cursor movement key 3a is again consecutively operated, the cursor KV moves to the position of the letter P and the displayed shape of the cursor changes to cursor shape K. At this time, because the data pointer value DP points to FC2 of the text data, it is discerned that the set range of the numbering processes has ended. Therefore, next data pointer value DP points to the letter P. Because no format data exists before the letter P, the shape at which the cursor is displayed is set according to the standard format stored at the initial address position of the text memory.

As described above in detail, the tape printer 1 according to the present embodiment is provided with a cursor display control program 22c for changing the shape at which the cursor K is displayed according to the format data set in the text data. Therefore, the shape at which the cursor K is displayed is changed according to the format data set at the present position of the text data. Accordingly, the format data set to the text data can be discerned at a glance from the shape of the displayed cursor.

Because a function is provided for displaying format data of the cursor K, which can be freely moved vertically and horizontally across the LCD 4, the range set for format data can be discerned at a glance.

Further, because set format can be recognized, there is no need for an operator to switch the print image display mode each time to the text mode. Therefore, the tape printer 1 is much easier to use and preparation of text and editing can be efficiently performed.

While only one exemplary embodiment of this invention has been described in detail, those skilled in the art will recognize that there are many possible modifications and variations which may be made in this exemplary embodiment while yet retaining many of the novel features and advantages of the invention. For example, instead of displaying the cursor in a different shape depending on the format set to the text, the cursor of the same shape may be displayed in a different color depending on the format set to the text. In such a case, a color LCD 4 is used. All such modifications and variations are intended to be included within the scope of the appended claims.

## Claims

1. A word processor having:
input means (3) for inputting text data representative of a text comprising characters;
print-like image data preparing means (20, 32) for preparing print-like image data based on the text data inputted from said input means (3);
display means (DM) for displaying print-like images of text data according to the image data prepared by said print-like image data preparing means (20, 32) and for displaying a cursor with the print-like images;
cursor movement means (3a, 3b) for moving the cursor over said display means (DM); and
format setting means (20, 22b) for setting various formats to portions of or all of the text data;
characterized in that cursor shape memory means (29) is provided for storing cursor shapes having different shapes for each type of format set by said format setting means (20, 22b); and
in that display control means (20, 22b) is provided for causing the cursor to be displayed in said display means (DM) in a different shape for each format when the cursor is moved using said cursor movement means (3a,3b), wherein the shape at which the cursor is displayed is based on the cursor shapes stored in said cursor shape memory means (29) and based further on format set for the text data where the cursor is positioned.

2. A word processor having:
input means (3) for inputting text data representative of a text comprising characters;
print-like image data preparing means (20, 32) for preparing print-like image data based on the text data inputted from said input means (3);
display means (DM) for displaying print-like images of text data according to the image data prepared by said print-like image data preparing means (20, 32) and for displaying a cursor with the print-like images;
cursor movement means (3a, 3b) for moving the cursor over said display means (DM); and
format setting means (20, 22b) for setting various formats to portions of or all of the text data;
characterized in that cursor kind memory means is provided for storing plural kinds of cursors different from one another corresponding to types of formats set by said format setting means (20, 22b); and
in that display control means (20, 22b) is provided for selecting and displaying a cursor corresponding to the set format wherein the kind of the cursor to be displayed is determined based on the cursor kinds stored in said cursor kind memory means and based further on format set for the text data where the cursor is positioned.

3. A word processor according to claim 1 or 2, further comprising:
print instruction means (P) for issuing an instruction to print the text data;
tape feeding means (24, 26) for feeding an elongated, tape-like print medium in a lengthwise direction of the print medium; and
printing means (PM) for printing the text data on the print medium while feeding the print medium by said tape feeding means (24, 26) in accordance with the instruction received from said print instruction means (P).

4. A word processor according to any one of claims 1 to 3, further comprising text memory means (31) for storing the text data input from said input means (3), the formats set to the text data being further stored in said text memory means (31) in relation to the portions of the text data to which the formats are set, and wherein a standard format is stored in a predetermined storage location of said text memory means (31) so that remaining portions of the text data to which the formats are not set are printed in accordance with the standard format.

5. A word processor according to claim 3 or 4, further comprising data pointing means (33) for pointing out data stored in said text memory means (31), and wherein said data pointing means (33) changes addresses of said text data memory (31) in accordance with the movement of the cursor over said display means (DM) to point out data on an address in which said data pointing means (33) is located.

6. A word processor in any one of claims 1 to 5, further comprising display cursor memory means (35) for storing the kind of the cursor to be displayed.

7. A word processor according to any one of claims 1 to 6, wherein each of the formats set by said format setting means (20, 22b) includes a format start code indicative of a start of the format and a format end code indicative of an end of the format, and wherein when the data pointed out by said data pointing means (33) indicates the format start code, said display control means (20, 22b) displays the cursor in said display means (DM) in a kind corresponding to the format having the format start code pointed out by said data pointing means (33), preferably until an associated format end code is pointed out by said data pointing means (33).

8. A word processor according to any one of claims 5 to 7,
wherein when the data pointed out by said data pointing means (33) indicates the format start code, the shape of the cursor to be displayed in said display means (DM) is stored in said display cursor memory means (35).

9. A word processor according to one of claims 5 to 8, wherein when the data pointed out by said data pointing means (33) indicates the format end code, contents stored in said display cursor memory means (35) are cleared.

10. A word processor according to any one of claims 1 through 9, wherein said plural kinds of cursors are distinguished by color displayed in said display means (DM).
